# EUROPEAN PATENT SPECIFICATION

(11) **EP 2 361 796 B1**
(45) Date of publication and mention of the grant of the patent: **17.10.2012**
(21) Application number: 11001227.5
(22) Date of filing: 15.02.2011
(51) Int. Cl.: B60H 1/00

(54) **Vehicle air conditioning unit**
Klimaanlageneinheit für ein Fahrzeug
Unité de climatisation pour véhicule

(30) Priority: 17.02.2010 JP 2010032669
(43) Date of publication of application: 31.08.2011
(73) Proprietor: Keihin Corporation, Shinjuku-ku, Tokyo (JP)
(72) Inventor: Higa, Naoki c/o Keihin Corporation, Shioya-gun, Tochigi-ken, (JP)
(74) Representative: Eisenführ, Speiser & Partner

(56) References cited:
- EP-A1- 1 630 015
- EP-A2- 1 092 572
- EP-A2- 2 036 748
- JP-A- 2001 328 419
- US-A1- 2003 013 404

## Description

### Field of the Invention

The present invention relates to a vehicle air conditioning unit.

### Description of Related Art

A vehicle air conditioning unit is a unit that supplies conditioned air having a controlled temperature to the interior of a vehicle, and controls a temperature of air or the like by using a heater core and an evaporator disposed in the course of a passageway of an air stream inside a casing.

Generally, the vehicle air conditioning unit includes a plurality of openings that discharge conditioned air to the casing, and may supply the conditioned air to different positions in the vehicle by selecting the openings supplying the conditioned air.

Further, the casing includes therein a heating opening which supplies air cooled by the evaporator to a heater core, and a cool wind opening which bypasses the heater core without supplying the cool air to the heater core. The vehicle air conditioning unit controls the temperature of the conditioned air by controlling the ratio of the air supplied to the heating opening and to the cool wind opening.

In this way, the vehicle air conditioning unit includes a plurality of openings through which the air stream which is the stream of air passes. Then, the vehicle air conditioning unit may control the opening ratio of each opening in order to control the temperature of the conditioned air and the supply ratio of the conditioned air with respect to a plurality of conditioned air supply positions installed in the interior of the vehicle, and the opening ratio of each opening is controlled by, for example, a slide door.

However, the above-described slide door controlling the opening ratio of the opening tends to be decreased in thickness for the purpose of achieving a decrease in the weight, a reduction in the material, a reduction in the driving force allowing the slide door to be slid, and the like.

Since the rigidity of the slide door decreases due to a decrease in the thickness of the slide door, the slide door is curved and bent to the downstream side when receiving the air stream. As a result, there is a problem in that the smooth movement of the slide door is prohibited.

Prior art document EP 2 036 748 A2 discloses a control device for controlling air flows in vehicles wherein the device includes a circulating rolling strap movable to cover to a certain extent an air flow opening and which can be moved and guided by a driving roller and a guiding roller. The rolling strap is moved in a casing with corresponding openings and grid bars which serve for additionally guiding the rolling strap. The grid bars are made of metal and further serve for reinforcing the housing in which the rolling strap is movably arranged. The grid bars extend basically in the direction of movement of the rolling strap and in a lateral direction to obtain the grid.

Document US 2003/0013404 A1 discloses a ventilation controlling apparatus wherein a flexible film member as a slide door is used to completely or partly cover an opening to control a corresponding air flow through the opening. The flexible film is arranged in a movable manner in a housing which also includes bars or ribs which serve for establishing contact to the flexible film and to reduce noise emanating from the slide door due to changes in air pressure. Such internal lattices control the position of the flexible slide door.

Prior art document EP 1 630 015 A1 discloses a valve driving mechanism for an air conditioning system, wherein first and second sliding valve plates/ are mechanically connected to a driving mechanism for moving the sliding valve plates and are supported by a housing for selectively closing two side-by-side air passages for regulating an air flow of cool and warm air. The sliding valve plates include reinforcement ribs for stabilizing the plates and avoiding any unwanted bending of the plates. Mechanical stability and regulating performance of the plates is increased.

In order to solve such a problem, for example, Japanese Unexamined Patent Application, First Publication No. H7-205635 discloses a technology that disposes a rib (deflection suppressing portion) on the downstream side of a thinned slide door (film damper) so as to suppress a deflection of the slide door.

However, when the rib suppressing the deflection of the slide door is actually provided, a phenomenon occurs in which the slide door is vibrated using the rib as a node when the slide door is exposed to the air stream.

When the slide door is vibrated in this way, the slide door repeatedly comes into contact with a member (which is generally a casing) supporting the slide door, so that noise is generated.

### SUMMARY OF THE INVENTION

The present invention is made in view of the above-described problems, and suppresses noise generated by a vibration of a slide door in a vehicle air conditioning unit.

According to the present invention the problems are solved by an air conditioning unit as set out in the appended claims.

The present invention adopts the following configuration in order to solve the above-described problems.

According to the present invention the vehicle air conditioning unit comprises: a slide door which has an opening and is adopted to control an opening ratio of the opening allowing an air stream to flow there through; a deflection suppressing portion which is adopted to suppress a deflection of the slide door by pressing the slide door; a vibration suppressing portion which is adopted to suppress an amplitude of a vibration of the slide door generated when the slide door is exposed to the air stream; and a support member supporting the slide door, wherein a plurality of the deflection suppressing portions is disposed in a width direction of the slide door, and the vibration suppressing portion is disposed between the deflection suppressing portions; wherein a distance between the support member and one of the deflection suppressing portions that is closest to the end of the slide door is larger than a distance between the deflection suppressing portion and the vibration suppressing portion or a distance between the vibration suppressing_portions; wherein the deflection suppressing portion and the vibration suppressing portion are disposed in a whole width of the slide door at nonuniform intervals.

Moreover, in the vehicle air conditioning unit the slide door may be slidable by a rack-and-pinion system including a rack and a pinion, a thickness of the slide door may be 1 mm or less, and the rack may be integrally formed with the slide door.

According to the present invention, the amplitude of the vibration of the slide door can be reduced by the vibration suppressing portion when the slide door is exposed to the air stream. As a result, a force with which the slide door hits the support member supporting the slide door is decreased, and hence noise generated at that time can be reduced.

Therefore, according to the present invention, in the vehicle air conditioning unit, noise generated by the vibration of the slide door can be suppressed.

### BRIEF DESCRIPTION OF THE DRAWINGS

FIG 1 is a cross-sectional view illustrating a schematic configuration of a vehicle air conditioning unit of an embodiment of the present invention;
FIG 2 is a schematic view illustrating a cool wind opening and a heating opening of the vehicle air conditioning unit of the embodiment of the present invention when seen from the stream direction of the cool wind.
FIG 3 is a schematic view illustrating an air mix damper of the vehicle air conditioning unit of the embodiment of the present invention when seen from the slide direction.

### DETAILED DESCRIPTION OF THE INVENTION

Hereinafter, an embodiment of a vehicle air conditioning unit according to the present invention will be described by referring to the accompanying drawings. Further, in the drawings below, the scales of the respective components are appropriately changed so that the respective members are shown in a recognizable size.

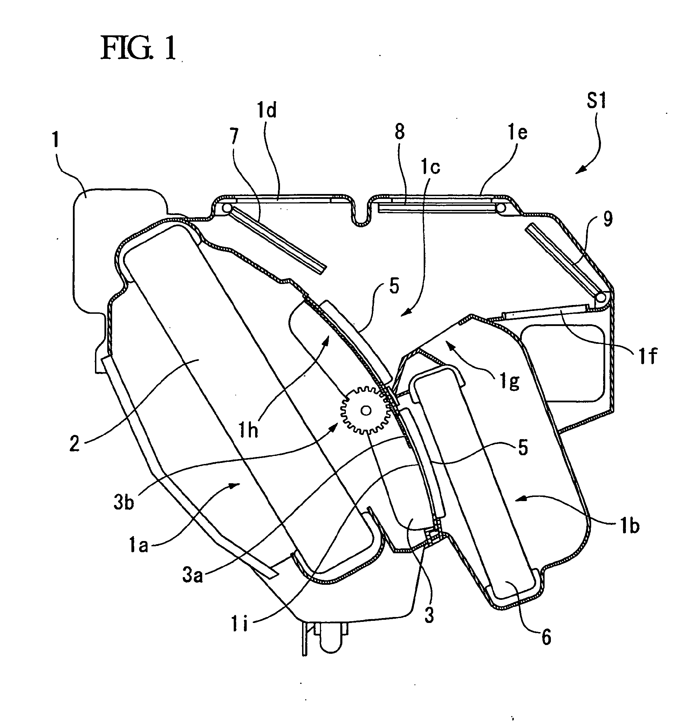

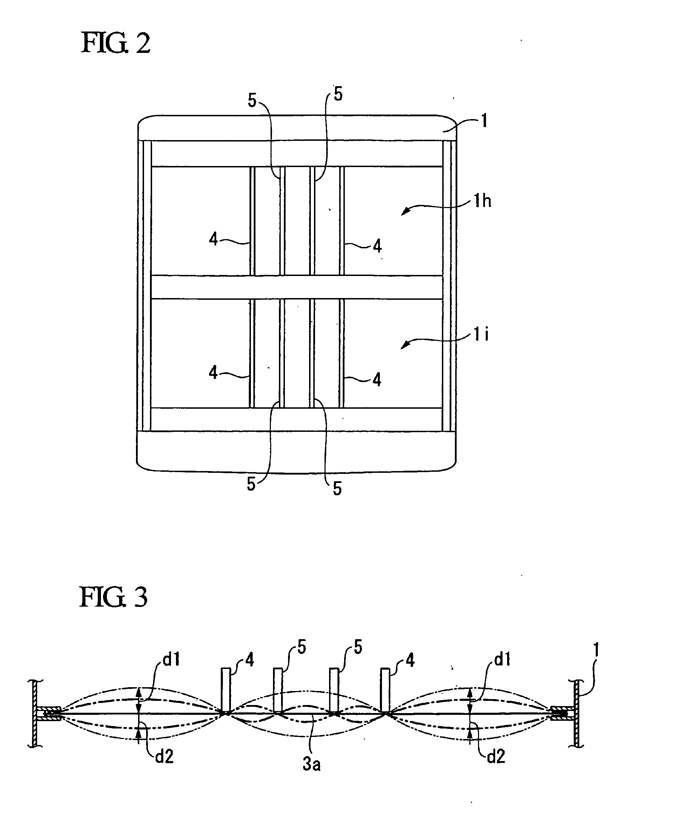

FIG 1 is a cross-sectional view illustrating a schematic configuration of a vehicle air conditioning unit S1 (HVAC: Heating Ventilation Air Conditioning) of the embodiment. As shown in FIG 1, the vehicle air conditioning unit S1 of the embodiment includes: a casing 1; an evaporator 2; an air mix damper unit 3; a deflection suppressing rib 4 (refer to FIGS. 2 and 3); a vibration suppressing rib 5; a heater core 6; a defroster outlet mode damper 7; a face outlet mode damper 8; and a foot outlet mode damper 9.

The casing 1 forms the external shape of the vehicle air conditioning unit S1 of the embodiment, and includes therein a cooling passageway 1a provided with the evaporator 2, a heating passageway 1b provided with the heater core 6, and a mixing portion 1c forming conditioned air by mixing a cool wind (first air stream) with a warm wind (second air stream). Further, the casing 1 includes a plurality of outlets (the defroster outlet 1d, the face outlet 1e, and the foot outlet 1f) that are exposed to the outside and are connected to the mixing portion 1c (mixing area).

The defroster outlet 1d is an opening that supplies the conditioned air to a window.

Further, the face outlet 1e is an opening that supplies the conditioned air to an occupant's face.

Furthermore, the foot outlet 1f is an opening that supplies the conditioned air to an occupant's feet.

Further, as shown in FIG 1, the casing 1 includes: a warm wind opening 1g which supplies a warm wind from the heating passageway 1b provided with the heater core 6 to the mixing portion 1c; a cool wind opening 1h which supplies a cool wind from the cooling passageway 1a provided with the evaporator 2 to the mixing portion 1c; and a heating opening li which supplies a cool wind from the cooling passageway 1a to the heating passageway 1b.

The evaporator 2 is a part of a refrigeration cycle mounted on a vehicle, and is disposed inside the cooling passageway 1a. The evaporator 2 generates a cool wind by cooling air supplied from a blower (not shown) into the cooling passageway 1a.

The air mix damper unit 3 is disposed on the downstream side of the evaporator 2, and controls the quantity of the cool wind generated from the evaporator 2 and supplied to the heating passageway 1b. More specifically, the air mix damper unit 3 includes: an air mix damper 3a (slide door) which is slidably disposed between the cool wind opening 1h and the heating opening li; and a rack-and-pinion mechanism 3b which drives the air mix damper 3a.

The air mix damper 3 a is formed of a thin resinous sheet that has a thickness of 1 mm or less, simultaneously controls an opening amount of the heating opening li and an opening amount of the cool wind opening 1h through which the cool wind (air stream) generated from the evaporator 2 passes, and thereby controlling an opening ratio between the cool wind opening 1h and the heating opening li.

Further, both ends of the air mix damper 3a in the width direction perpendicular to the slide direction are slidably fitted to a guide groove (support member) provided in the inner wall of the casing 1, and both ends pass between the cool wind opening 1h and the heating opening li while sliding on the guide groove.

The rack-and-pinion mechanism 3b is a mechanism that allows the air mix damper 3 a to be slid, and includes a pinion which is rotationally driven by receiving a driving force from a motor (not shown) and a rack which converts the rotative force of the pinion into the linear force and transmits the linear force to the air mix damper 3 a.

Further, in the vehicle air conditioning unit S1 of the embodiment, the rack of the rack-and-pinion mechanism 3b is integrally formed with the air mix damper 3a.

In this way, the vehicle air conditioning unit S1 of the embodiment has a configuration in which the air mix damper 3 a is slid by a rack-and-pinion system including a rack and a pinion, the thickness of the air mix damper 3a is 1 mm or less, and the rack is integrally formed with the air mix damper 3a.

Further, in the vehicle air conditioning unit S1 of the embodiment, the quantity of the conditioned air supplied to the heating passageway 1b is controlled by controlling the opening ratio between the cool wind opening 1h and the heating opening li by using the air mix damper 3 a. As a result, since the mixing ratio between the cool wind and the warm wind in the mixing portion 1c is controlled, the temperature of the conditioned air is controlled.

Subsequently, a deflection suppressing rib 4 (deflection suppressing portion) and a vibration suppressing rib 5 (vibration suppressing portion) will be described by referring to FIGS. 1 to 3. Further, FIG. 2 is a schematic view illustrating the cool wind opening 1h and the heating opening li when seen from the stream direction of the cool wind. Furthermore, FIG 3 is a schematic view illustrating the air mix damper 3 a when seen from the slide direction.

The deflection suppressing rib 4 is a plate that suppresses a deflection of the air mix damper 3a, and as shown in FIG 2, the deflection suppressing rib 4 is disposed across each of the cool wind opening 1h and the heating opening li in the slide direction of the air mix damper 3a. The deflection suppressing rib 4 is a plate that is integrally formed with the casing 1, and is disposed on the downstream side of the air mix damper 3a.

The deflection suppressing rib 4 may suppress a deflection of the air mix damper 3a by pressing the air mix damper 3a from the downstream side when the air mix damper 3a is curved and bent to the downstream side due to a cool wind applied thereto.

Further, in the vehicle air conditioning unit S1 of the embodiment, two deflection suppressing ribs 4 are disposed across each of the cool wind opening 1h and the heating opening li, and serve as the reinforcement members of the casing 1.

The vibration suppressing rib 5 is a plate that suppresses an amplitude of a vibration of air mix damper 3a generated when the air mix damper 3a is exposed to a cool wind, and as shown in FIG 2, the vibration suppressing rib 5 is disposed across each of the cool wind opening 1h and the heating opening li in the slide direction of the air mix damper 3 a. The vibration suppressing rib 5 is a plate that is integrally formed with the casing 1 and is disposed on the downstream side of the air mix damper 3a as in the deflection suppressing rib 4.

The vibration suppressing rib 5 corresponds to a contact member of the present invention, and when the air mix damper 3a is exposed to a cool wind and is vibrated using the deflection suppressing rib 4 as a node, the vibration suppressing rib comes into contact with the air mix damper 3 a from the downstream side thereof so as to suppress an amplitude of the vibration of the air mix damper 3a.

Further, in the vehicle air conditioning unit S1 of the embodiment, two vibration suppressing ribs 5 are disposed across each of the cool wind opening 1h and the heating opening li as in the deflection suppressing rib 4, and serve as the reinforcement members of the casing 1.

Further, as shown in FIGS. 2 and 3, the deflection suppressing ribs 4 and the vibration suppressing ribs 5 are disposed in the whole width of the air mix damper 3a with a nonuniform interval therebetween in the vehicle air conditioning unit S1 of the embodiment. In other words, the ends (two nodes at both ends) of the air mix damper 3a in the width direction, the deflection suppressing ribs 4, and the vibration suppressing ribs 5 are disposed at nonuniform intervals.

Specifically, when the air mix damper 3a is present, the distance between the end of the air mix damper 3a and the deflection suppressing rib 4 closest to the end in the width direction of the air mix damper 3 a is not equal to the distance between the deflection suppressing rib 4 and the vibration suppressing rib 5 and the distance between the vibration suppressing ribs 5, and the deflection suppressing rib 4 and the vibration suppressing rib 5 are disposed to be close to the center of the whole width of the air mix damper 3 a.

Further, as shown in FIGS. 2 and 3, in the vehicle air conditioning unit S1 of the embodiment, the vibration suppressing ribs 5 are disposed between two (a plurality of) deflection suppressing ribs 4 disposed in the width direction of the air mix damper 3a.

When the vibration suppressing ribs 5 are not present as shown in FIG. 3, the air mix damper 3 a is repeatedly vibrated in the area between the thin line depicted by the one-dotted chain line and the thin line depicted by the two-dotted chain line, and particularly, the air mix damper 3a is vibrated with a larger amplitude d1 at the side of the casing 1 than the center of the air mix damper 3 a.

On the contrary, when the vibration suppressing ribs 5 are present, the air mix damper 3a is repeatedly vibrated in the area between the thick line depicted by the one-dotted chain line and the thick line depicted by the two-dotted chain line, and an amplitude d2 at the side of the casing 1 becomes smaller than the amplitude d1.

This may be understood as below. When the vibration suppressing ribs 5 come into contact with the air mix damper 3a between the deflection suppressing ribs 4, the displacement amount of the air mix damper 3a between the deflection suppressing ribs 4 decreases. Accordingly, the transmission of the vibration in the width direction of the air mix damper 3 a is reduced, and the displacement of the air mix damper 3 a between the deflection suppressing rib 4 and the casing 1 is suppressed.

Returning to FIG 1, the heater core 6 is disposed inside the heating passageway 1b, and generates a warm wind by heating a cool wind supplied via the heating opening li.

The defroster outlet mode damper 7 is a damper that opens or closes the defroster outlet 1d, and is adapted to be rotatable inside the casing 1.

The face outlet mode damper 8 is a damper that opens or closes the face outlet 1e, and is adapted to be rotatable inside the casing 1.

The foot outlet mode damper 9 is a damper that opens or closes the foot outlet If, and is rotatable inside the casing 1.

Further, the air mix damper unit 3, the defroster outlet mode damper 7, the face outlet mode damper 8, and the foot outlet mode damper 9 receive power from a motor (not shown).

According to the vehicle air conditioning unit S1 of the embodiment with such a configuration, when both the cool wind opening 1h and the heating opening li are opened by the air mix damper unit 3, the air supplied to the cooling passageway 1a is cooled by the evaporator 2 so that it becomes a cool wind, and a part of the cool wind is supplied to the heating passageway 1b.

Further, a warm wind generated by the heater core 6 (heating) in the heating passageway 1b is supplied from the warm wind opening 1g to the mixing portion 1c, and the cool wind not supplied to the heating passageway 1b is supplied from the cool wind opening 1h to the mixing portion 1c.

The cool wind and the warm wind supplied to the mixing portion 1c are mixed to become conditioned air (temperature-controlled air), and the conditioned air is supplied from several outlets (opened outlets) among the defroster outlet 1d, the face outlet 1e, and the foot outlet 1f to the interior of the vehicle.

Here, in the vehicle air conditioning unit S1 of the embodiment, there are provided the heating opening li and the cool wind opening 1h through which the cool wind supplied from the evaporator 2 passes, and the air mix damper 3a that controls the opening ratio between the cool wind opening 1h and the heating opening li. Further, there is provided the vibration suppressing rib 5 that suppresses the amplitude of the vibration of the air mix damper 3a generated by the collision of the cool wind and the deflection suppressing rib 4 (node).

Since the amplitude of the vibration of the air mix damper 3a is suppressed by the vibration suppressing rib 5 when the air mix damper 3 a is exposed to a cool wind, a force with which the air mix damper 3 a hits the support member (the casing 1 provided in the guide groove) supporting the air mix damper 3 a is decreased, and noise generated at the time may be reduced.

Accordingly, according to the vehicle air conditioning unit S1 of the embodiment, noise generated by the vibration of the air mix damper 3 a may be suppressed.

Further, in the vehicle air conditioning unit S1 of the embodiment, the deflection suppressing ribs 4 and the vibration suppressing ribs 5 are disposed in the whole width of the air mix damper 3a at nonuniform intervals.

For this reason, the vibration of the air mix damper 3 a is difficult to be transmitted in the width direction, and the vibration of the air mix damper 3 a may be further reduced.

Further, in the vehicle air conditioning unit S1 of the embodiment, the vibration suppressing ribs 5 are disposed between two (a plurality of) deflection suppressing ribs 4 disposed in the width direction of the air mix damper 3a.

For this reason, the space between the casing 1 and the deflection suppressing rib 4 may be reliably made wide in the width direction of the air mix damper 3a. In the vehicle air conditioning unit S1, since there is a tendency that the air stream having a cool wind is closer to the casing inside the passageway, the air stream inside the casing 1 may be smoothly controlled by ensuring a wide space between the casing 1 and the deflection suppressing rib 4. Accordingly, in the embodiment, as shown in FIG 2, the distance between the end of the air mix damper 3 a and the deflection suppressing rib 4 closest to the end in the width direction of the air mix damper 3 a is larger than the distance between the deflection suppressing rib 4 and the vibration suppressing rib 5 or the distance between the vibration suppressing ribs 5.

Further, the vehicle air conditioning unit S1 of the embodiment has a configuration in which the thickness of the air mix damper 3a is 1 mm or less, and the rack is integrally formed with the air mix damper 3 a. For this reason, the air mix damper 3 a can be smoothly slid.

Further, in the vehicle air conditioning unit S1 of the embodiment, the deflection suppressing rib 4 and the vibration suppressing rib 5 are integrally formed with the casing 1.

For this reason, the deflection suppressing rib 4 and the vibration suppressing rib 5 may be easily disposed at the optimal positions by assembling the casing 1.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the appended claims.

For example, in the above-described embodiment, a configuration has been described in which the vibration suppressing portion is the vibration suppressing rib 5 integrally formed with the casing 1 and disposed on the downstream side of the air mix damper 3 a.

However, the present invention is not limited thereto. The present invention may adopt a configuration in which the vibration suppressing rib 5 is provided in the air mix damper 3a or a configuration in which the vibration suppressing rib 5 is disposed on the upstream side of the air mix damper 3 a. Further, in the present invention, the vibration suppressing portion is not necessarily be formed as a plate member such as a rib, and may be formed in other shapes such as a rod.

Further, in the above-described embodiment, a configuration has been described in which two deflection suppressing ribs 4 and two vibration suppressing ribs 5 are provided for each opening (the cool wind opening 1h and the heating opening li).

However, the present invention is not limited thereto, and the number of the deflection suppressing ribs 4 and the vibration suppressing ribs 5 may be arbitrarily set.

Further, in the above-described embodiment, a configuration has been described in which the slide door is the air mix damper 3 a.

However, the present invention is not limited thereto, and when there is provided a slide door controlling the opening ratio of other openings (the defroster outlet 1d, the face outlet 1e, the foot outlet 1f, and the like), the present invention may be applied to the slide door provided in the other openings.

In the vehicle air conditioning unit, noise generated by the vibration of the slide door may be suppressed.

## Claims

1. A vehicle air conditioning unit (S1) comprising:
a slide door (3a) which has an opening and is adopted to control an opening ratio of the opening (1h, 1i) allowing an air stream to flow therethrough;
a deflection suppressing portion (4) which is adopted to suppress a deflection of the slide door (3a) by pressing the slide door (3a);
a vibration suppressing portion (5) which is adopted to suppress an amplitude of a vibration of the slide door (3a) generated when the slide door (3a) is exposed to the air stream; and
a support member (1) supporting the slide door (3a),
wherein a plurality of the deflection suppressing portions (4) is disposed in a width direction of the slide door (3a), and the vibration suppressing portion (5) is disposed between the deflection suppressing portions (4); **characterized in that**
a distance between the support member (1) and one of the deflection suppressing portions (4) that is closest to the end of the slide door (3a) is larger than a distance between the deflection suppressing portion (4) and the vibration suppressing portion (5) or a distance between the vibration suppressing portions (5);
wherein the deflection suppressing portion (4) and the vibration suppressing portion (5) are disposed in a whole width of the slide door (3a) at nonuniform intervals.

2. The vehicle air conditioning unit (S1) according to claim 1, wherein the vibration suppressing portion (5) comes into contact with the slide door (3a) from a downstream side of the air stream when the slide door (3a) is vibrated.

3. The vehicle air conditioning unit (S1) according to claim 1 or 2, wherein the slide door (3a) is slidable by a rack-and-pinion system including a rack and a pinion, a thickness of the slide door (3a) is 1 mm or less, and the rack is integrally formed with the slide door (3a).

## Patentansprüche

1. Fahrzeug- Klimaanlageneinheit (S1), enthaltend:
eine Schiebetür (3a), die eine Öffnung aufweist und dafür ausgelegt ist, ein Öffnungsverhältnis der Öffnung (1 h, 1 i) zu steuern, die ein Hindurchströmen eines Luftstroms erlaubt;
einen Durchbiegungsunterdrückungsabschnitt (4), der dafür ausgelegt ist, eine Durchbiegung der Schiebetür (3a) durch Drücken gegen die Schiebetür (3a) zu unterdrücken;
einen Schwingungsunterdrückungsabschnitt (5), der dafür ausgelegt ist, eine Amplitude einer Schwingung der Schiebetür (3a), die erzeugt wird, wenn die Schiebetür (3a) dem Luftstrom ausgesetzt ist, zu unterdrücken; und
ein Unterstützungselement (1), das die Schiebetür (3a) unterstützt,
wobei mehrere der Durchbiegungsunterdrückungsabschnitte (4) in einer Breitenrichtung der Schiebetür (3a) angeordnet sind und der Schwingungsunterstützungsabschnitt (5) zwischen den Durchbiegungsunterdrückungsabschnitten (4) angeordnet ist;
**dadurch gekennzeichnet, dass**
ein Abstand zwischen dem Unterstützungselement (1) und einem der Durchbiegungsunterdrückungsabschnitte (4), der dem Ende der Schiebetür (3a) am nächsten ist, größer ist als ein Abstand zwischen dem Durchbiegungsunterdrückungsabschnitt (4) und dem Schwingungsunterdrückungsabschnitt (5) oder ein Abstand zwischen den Schwingungsunterdrückungsabschnitten (5);
wobei der Durchbiegungsunterdrückungsabschnitt (4) und der Schwingungsunterdrückungsabschnitt (5) in einer gesamten Breite der Schiebetür (3a) in ungleichmäßigen Intervallen angeordnet sind.

2. Fahrzeug-Klimaanlageneinheit (S1) nach Anspruch 1, wobei der Schwingungsunterdrückungsabschnitt (5) von einer stromabwärtigen Seite des Luftstroms mit der Schiebetür (3a) in Kontakt kommt, wenn die Schiebetür (3a) in Schwingung versetzt wird.

3. Fahrzeug-Klimaanlageneinheit (S1) nach Anspruch 1 oder 2, wobei die Schiebetür (3a) durch ein Zahnstangensystem verschiebbar ist, das eine Zahnstange und ein Ritzel enthält, wobei eine Dicke der Schiebetür (3a) gleich 1 mm oder weniger beträgt und die Zahnstange integral mit der Schiebetür (3a) ausgebildet ist.

## Revendications

1. Unité (S1) de traitement d'air pour un véhicule, comprenant :
une porte (3a) coulissante qui a une ouverture et qui est conçue pour commander un rapport d'ouverture de l'ouverture (1h, 1i) permettant à un courant d'air d'y passer ;
une partie (4) de suppression d'une déviation, qui est conçue pour supprimer une déviation de la porte (3) coulissante en exerçant une pression sur la porte (3a) coulissante ;
une partie (5) de suppression des vibrations, qui est conçue pour supprimer une amplitude d'une vibration de la porte (3a) coulissante produite lorsque la porte (3a) coulissante est soumise au courant d'air ; et
un élément (1) de support supportant la porte (3a) coulissante,
dans laquelle une pluralité de parties (4) de suppression d'une déviation est disposée dans une direction en largeur de la porte (3a) coulissante et la partie (5) de suppression des vibrations est disposée entre les parties (4) de suppression d'une déviation ; **caractérisé en ce que**
une distance entre l'élément (1) de support est l'une des parties (4) de suppression d'une déviation, qui est la plus proche de l'extrémité de la porte (3a) coulissante, est plus grande qu'une distance entre la partie (4) de suppression d'une déviation et la partie (5) de suppression des vibrations ou qu'une distance entre les parties (5) de suppression des vibrations ;
dans laquelle la partie (4) de suppression d'une déviation et la partie (5) de suppression des vibrations sont disposées dans toute une largeur de la porte (3a) coulissante à des intervalles qui ne sont pas uniformes.

2. Unité (S1) de traitement d'air d'un véhicule suivant la revendication 1, dans lequel la partie (5) de suppression des vibrations vient en contact avec la porte (3a) coulissante à partir d'un côté en aval du courant d'air, lorsque la porte (3a) coulissante vibre.

3. Unité (S1) de traitement d'air d'un véhicule suivant la revendication 1 ou 2, dans laquelle la porte (3a) coulissante peut coulisser par un système à pignon et crémaillère comprenant une crémaillère et un pignon, une épaisseur de la porte (3a) coulissante étant inférieure ou égale à 1 mm et la crémaillère étant intégrée à la porte (3a) coulissante.
